(19) **Europäisches Patentamt**
European Patent Office
Office européen des brevets

(11) **EP 1 258 407 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(51) Int Cl.:
***B60T 8/88*** *(2006.01)*

(21) Anmeldenummer: **02008629.4**

(22) Anmeldetag: **17.04.2002**

(54) **Verfahren und Vorrichtung zur Ermittlung eines korrigierten Offsetwertes**

Method and device for determining a corrected offset value

Procédé et dispositif pour déterminer un décalage corrigé

(84) Benannte Vertragsstaaten:
**DE FR GB IT**

(30) Priorität: **16.05.2001 DE 10123846**
**09.02.2002 DE 10205396**

(43) Veröffentlichungstag der Anmeldung:
**20.11.2002 Patentblatt 2002/47**

(73) Patentinhaber: **ROBERT BOSCH GMBH**
**70442 Stuttgart (DE)**

(72) Erfinder:
- **Winner, Hermann**
  **76467 Bietigheim (DE)**
- **Urban, Werner**
  **71665 Vaihingen/Enz, (DE)**
- **Lueder, Jens**
  **70806 Kornwestheim (DE)**
- **Keller, Frieder**
  **76698 Ubstadt-Weiher (DE)**

(56) Entgegenhaltungen:
DE-A- 19 636 443        DE-A- 19 736 199
US-A- 5 719 790         US-B1- 6 223 107

**Beschreibung**

Stand der Technik

Die Erfindung geht von einer Vorrichtung bzw. einem Verfahren zur Bestimmung eines korrigierten Offsetwertes aus.

Bei der Adaptiven Geschwindigkeitsregelung ACC (ACC = Adaptive Cruise Control) wird für ein Fahrzeug die Einhaltung eines von der Geschwindigkeit abhängigen Abstands zum vorausfahrenden Fahrzeug geregelt. Durch die DE 197 22 947 C1 ist aus diesem Bereich ein Verfahren bekannt, bei dem unter anderem auch der zukünftige Kursverlauf eines Fahrzeuges mit dem ACC-System in die ACC-Regelung mit einbezogen wird. Hierzu wird der zukünftige Kursbereich wenigstens eines vorausfahrenden Fahrzeuges bestimmt und dann zu allen detektierten Fahrzeugen ein seitlicher Querversatz ermittelt Bei stationären Krümmungsverhältnissen der Fahrbahn, d.h. in einem Geradenstück oder im Bereich der konstanten Krümmung einer Kurve, lässt sich beim bekannten Verfahren auch leicht mit Hilfe eines Gier- oder Drehratensignals der zukünftige Fahrkorridor bestimmen.

Aus der DE 196 36 443 A1 ist ein System zur Überwachung von Sensoren in einem Fahrzeug bekannt. Dieses System enthält Mittel, mit denen wenigstens für zwei Sensoren, ausgehend von wenigstens den von Ihnen erzeugten Signalen, für die Sensoren gleich definierte Vergleichsgrößen ermittelt werden. Ferner enthält das System weitere Mittel, mit denen in Abhängigkeit von den wenigstens ermittelten Vergleichsgrößen, eine Referenzgröße ermittelt wird. Ausgehend von wenigstens der ermittelten Referenzgröße wird in Überwachungsmitteln wenigstens für einen Sensor eine Überwachung durchgeführt. Neben den Überwachungsmitteln enthält das System zusätzlich Mittel, mit denen wenigstens für einen Sensor eine Korrektur des von ihm erzeugten Signals, wenigstens in Abhängigkeit von der Referenzgröße, durchgeführt wird.

Vorteile der Erfindung

Die vorliegende Erfindung geht aus von einer Vorrichtung sowie von einem Verfahren zur Ermittlung eines korrigierten Offsetwertes, der den Offset des Ausgangssignals eines ersten Fahrzeugsensors repräsentiert, wobei der Sensor wenigstens eine Bewegung eines Fahrzeugs erfasst. Der Kerngedanke der Erfindung besteht darin, dass erste Mittel vorgesehen sind,

- mittels der wenigstens zwei den Offset des Sensors repräsentierende Offsetwerte auf wenigstens zwei unterschiedliche Arten ermittelt werden und
- für wenigstens einen der ermittelten Offsetwerte des Sensors zusätzlich zum Offsetwert ein Fehlerband ermittelt wird, und dass zweite Mittel vorgesehen sind,
- mittels der abhängig von den ermittelten Offsetwerten und wenigstens einem der Fehlerbänder der korrigierte Offsetwert ermittelt wird.

Der Vorteil der Erfindung gegenüber dem eingangs genannten Stand der Technik ist der, dass bei der erfindungsgemäßen Vorrichtung bzw. dem erfindungsgemäßen Verfahren durch die zweiten Mittel eine genauere Bestimmung der Offsetwerte, welche die Ausgangssignale des Fahrzeugsensors bestimmen, erfolgt. Diese genauere Bestimmung der Offsetwerte erfolgt dadurch, dass durch die ersten Mittel wenigstens zwei den Offset des Sensors repräsentierende Offsetwerte auf wenigstens zwei unterschiedliche Arten ermittelt werden. Durch die Einbeziehung wenigstens eines Fehlerbandes wird eine noch höhere Präzision bei der Bestimmung des korrigierten Offsetwertes erreicht.

Eine vorteilhafte Ausgestaltung der Erfindung ist dadurch gekennzeichnet, dass durch die Fehlerbänder die Angabe jeweils eines Minimalwertes und eines Maximalwertes für den jeweiligen Offsetwert ermöglicht wird. Durch die Angabe der Minimal- und Maximalwerte wird der Bereich festgelegt, in welchem sich der Offsetwert befindet.

Außerdem ermöglicht die Angabe der Minimal- und Maximalwerte, dass die Ermittlung des korrigierten Offsetwertes des Fahrzeugsensors durch eine Mittelwertbildung zwischen dem Minimum aller Maximalwerte und dem Maximum aller Minimalwerte der auf mindestens zwei unterschiedliche Weisen gewonnenen Minimalwerte und Maximalwerte der Offsetwerte des Fahrzeugsensors erfolgt. Diese Methode der Ermittlung des korrigierten Offsetwertes zeichnet sich dadurch aus, dass sie im Steuergerät besonders einfach zu implementieren ist.

Eine weitere vorteilhafte Ausführungsform ist dadurch gekennzeichnet, dass die Ermittlung des korrigierten Offsetwertes des Fahrzeugsensors durch eine gewichtete Mittelwertbildung zwischen den ermittelten Offsetwerten des Fahrzeugsensors erfolgt, wobei der Offsetwert mit wachsender Breite des Fehlerbandes ein geringeres Gewicht in der Mittelwertbildung erhält. Ein breites Fehlerband bedeutet, dass die Angabe der Offsetwertes mit einer größeren Unsicherheit verbunden ist. Deshalb gehen "unsichere" Offsetwerte mit einem geringeren Gewicht als "sichere" Offsetwerte in die Ermittlung des korrigierten Offsetwertes ein.

Es ist von Vorteil, wenn wenigstens ein Fehlerband um so breiter wird, je länger die letzte Ermittlung des zugehörigen Offsetwertes zurückliegt. Je länger die Ermittlung des Offsetwertes zurückliegt, desto weniger aktuell ist dieser Werte, da sich in diesem Zeitraum beispielsweise der Fahrzustand oder die Umgebungsbedingungen möglicherweise stark verändert haben. Deshalb wird die Bedeutung dieses Offsetwertes im Laufe der Zeit gemindert. Dies drückt sich durch ein breiteres Fehlerband aus.

Eine vorteilhafte Ausgestaltung ist dadurch gekennzeichnet,

- dass jede der unterschiedlichen Arten der Ermittlung von Offsetwerten einen vom Fahrzustand abhängigen zugeordneten Gültigkeitsbereich aufweist,
- für diejenigen Arten, welche momentan infolge des vorliegenden Fahrzustandes außerhalb ihres Gültigkeitsbereiches sind und keine den Offsetwert repräsentierende Größe ermitteln, die innerhalb des letzten Vorliegens des Gültigkeitsbereiches zuletzt mit dieser Art ermittelte, den Offsetwert repräsentierende Größe genommen wird und
- das zugehörige Fehlerband um so breiter wird, je länger diese letzte gültige Ermittlung dieser den Offsetwert repräsentierenden Größe zurückliegt.

Es ist von Vorteil, wenn der Fahrzeugsensor die Gierbewegung des Fahrzeugs erfasst. Die vorliegende Erfindung lässt sich vorteilhaft auf die Ausgangssignale eines Drehratensensors anwenden, d.h der Fahrzeugsensor erfasst die Gierrate. In diesem Fall kann die Erfindung vorteilhaft in einem System zur automatischen Abstandsregelung und/oder -steuerung eingesetzt werden.

Eine vorteilhafte Ausführungsform ist dadurch gekennzeichnet, dass die Ermittlung der Offsetwerte abhängig von Ausgangssignalen von weiteren Sensoren, die die Bewegung des Fahrzeugs erfassen, und/oder des Fahrzeugsensors geschieht, wobei insbesondere vorgesehen ist, dass die Ausgangssignale

- die Raddrehzahlen wenigstens eines Fahrzeugrades und/oder
- den Lenkradwinkel des Fahrzeugs und/oder
- die Gierrate des Fahrzeugs
repräsentieren.

Von besonderem Vorteil hierbei ist, dass die dazu erforderlichen Sensoren sowie deren Ausgangssignale in Kraftfahrzeug-Regelungssystemen oder Fahrerassistenzsystemen, insbesondere in Fahrdynamikregelungssystemen (FDR) und Abstandsregelungssystemen (ACC), bereits serienmäßig vorhanden sind.

Eine weitere vorteilhafte Ausgestaltung ist dadurch gekennzeichnet, dass die ersten Mittel derart ausgestaltet sind, dass auf wenigstens eine Art ein Offsetwert abhängig von dem momentan vorliegenden Betriebszustand des Fahrzeugs ermittelt wird, wobei insbesondere vorgesehen ist, dass der momentan vorliegende Betriebszustand durch

- die Fahrzeuglängsgeschwindigkeit und/oder
- die Gierrate und/oder
- den Lenkradwinkel

bestimmt wird. Diese Ausgestaltung erlaubt beispielsweise für den Fall, dass der Fahrzeugsensor die Gierrate erfaßt, die Ermittlung von Offsetwerten des Drehratensensors für den Fall von nahezu verschwindender Längsgeschwindigkeit des Fahrzeugs (Stillstandsabgleichsverfahren) oder für den Fall von nicht nahezu verschwindender Längsgeschwindigkeit (Lenkwinkelverfahren).

Eine vorteilhafte Ausführungsform besteht darin, dass die ersten Mittel derart ausgestaltet sind, dass auf wenigstens eine Art ein Offsetwert

- abhängig von wenigstens der Auswertung eines Ausgangssignals wenigstens eines der weiteren Sensoren zu wenigstens zwei unterschiedlichen Zeitpunkten und/oder
- abhängig von wenigstens der Auswertung eines Ausgangssignals des Fahrzeugsensors zu wenigstens zwei unterschiedlichen Zeitpunkten,
ermittelt wird, wobei insbesondere vorgesehen ist, dass die Ermittlung des wenigstens einen Offsetwertes
- abhängig von dem zeitlichen Verlauf des Ausgangssignals des Fahrzeugsensors und/oder
- abhängig von Signalen, welche die Raddrehzahlen wenigstens eines Fahrzeugrades repräsentieren,

erfolgt. Diese Auswertung von Ausgangssignalen von Sensoren zu unterschiedlichen Zeitpunkten erlaubt beispielsweise den Einsatz von Histogrammverfahren oder von Regressionsverfahren zur Ermittlung eines Offsetwertes des Fahrzeugsensors.

Eine vorteilhafte Ausgestaltung der Erfindung ist dadurch gekennzeichnet, dass die ersten Mittel derart ausgestaltet sind, dass

- auf eine erste Art ein erster Offsetwert durch ein Stillstandsabgleichsverfahren, charakterisiert durch eine verschwindende Fahrzeuglängsgeschwindigkeit, eine verschwindende Gierrate, und eine verschwindende zeitliche Ableitung der Gierrate und
- auf eine zweite Art ein zweiter Offsetwert durch ein Lenkwinkelverfahren, charakterisiert durch die Fahrzeuglängsgeschwindigkeit und den Lenkradwinkel, und
- auf eine dritte Art ein dritter Offsetwert durch ein Histogrammverfahren, und
- auf eine vierte Art ein vierter Offsetwert durch ein Regressionsverfahren mit Berechnung der Gierrate aus Raddrehzahldifferenzen,

ermittelt wird. Damit liegen unterschiedliche Verfahren mit unterschiedlichen Gültigkeitsbereichen vor.

In einer weiteren Ausgestaltung wird der mittels der zweiten Mittel ermittelte korrigierte Offsetwert in regelmäßigen oder nicht regelmäßigen Zeitabständen ermittelt wird.

In einer vorteilhaften Ausgestaltung der Erfindung wird in den ersten Mitteln der Offsetwert abhängig von Ausgangssignalen des Fahrzeugsensors selbst und/oder von Ausgangssignalen von weiteren Sensoren, welche die Bewegung des Fahrzeugs umfassen, ermittelt. Dabei ist insbesondere vorgesehen, dass die Ausgangssignale

- die Raddrehzahlen wenigstens eines Fahrzeugrades und/oder
- den Lenkradwinkel des Fahrzeugs und/oder
- die Gierbewegung des Fahrzeugs

repräsentieren. Von besonderem Vorteil hierbei ist, dass die erforderlichen Sensoren sowie deren Ausgangssignale in Kraftfahrzeug-Regelungssytemen oder Fahrerassistenzsystemen, insbesondere in Fahrdynamikregelungssystemen (FDR) und Abstandsregelungssystemen (ACC), bereits serienmäßig vorhanden sind.

Für die Ausgestaltung der für die Ermittlung der Offsetwerte vorgesehenen ersten Mittel gibt es verschiedene Möglichkeiten. In einer vorteilhaften Ausgestaltung wird auf wenigstens eine Art ein Offsetwert abhängig von dem momentan vorliegenden Betriebszustand des Fahrzeugs ermittelt. Dabei ist insbesondere vorgesehen, dass der momentan vorliegende Betriebszustand durch

- die Fahrzeuglängsgeschwindigkeit und/oder
- die Gierrate und/oder
- den Lenkradwinkel

bestimmt wird. Diese Ausgestaltung erlaubt beispielsweise für den Fall, dass der Fahrzeugsensor die Gierrate erfaßt, die Ermittlung von Offsetwerten des Drehratensensors für den Fall von nahezu verschwindender Längsgeschwindigkeit des Fahrzeugs (Stillstandsabgleichsverfahren) oder für den Fall von nicht nahezu verschwindender Längsgeschwindigkeit (Lenkwinkelverfahren).

Eine weitere vorteilhafte Ausgestaltung ist dadurch gekennzeichnet, dass die ersten Mittel derart ausgestaltet sind, dass auf wenigstens eine Art ein Offsetwert

- abhängig von wenigstens der Auswertung eines Ausgangssignals des Fahrzeugsensors zu wenigstens zwei unterschiedlichen Zeitpunkten und/oder
- abhängig von wenigstens der Auswertung eines Ausgangssignals wenigstens eines der weiteren Sensoren zu wenigstens zwei unterschiedlichen Zeitpunkten

ermittelt wird. Hierbei ist insbesondere vorgesehen, dass die Ermittlung des wenigstens einen Offsetwertes

- abhängig von dem zeitlichen Verlauf des Ausgangssignals und/oder
- abhängig von Signalen, welche die Raddrehzahlen wenigstens eines Fahrzeugrades repräsentieren,

erfolgt. Diese Auswertung von Ausgangssignalen von Sensoren zu unterschiedlichen Zeitpunkten erlaubt beispielsweise den Einsatz von Histogrammverfahren oder von Regressionsverfahren zur Ermittlung eines Offsetwertes des Fahrzeugsensors.

Eine vorteilhafte Ausgestaltung der Erfindung kann beispielsweise in einem Einsatz von vier Verfahren, nämlich einem Stillstandsabgleichsverfahren, einem Lenkwinkelverfahren, einem Histogrammverfahren und einem Regressionsverfahren bestehen.

Dabei wird

- auf eine erste Art ein erster Offsetwert durch ein Stillstandsabgleichsverfahren, charakterisiert durch eine verschwindende Fahrzeuglängsgeschwindigkeit, eine verschwindende Gierrate, und eine verschwindende zeitliche Ableitung der Gierrate und

- auf eine zweite Art ein zweiter Offsetwert durch ein Lenkwinkelverfahren, charakterisiert durch die Fahrzeuglängsgeschwindigkeit und den Lenkradwinkel, und
- auf eine dritte Art ein dritter Offsetwert durch ein Histogrammverfahren, und
- auf eine vierte Art ein vierter Offsetwert durch ein Regressionsverfahren mit Berechnung der Gierrate aus Raddrehzahldifferenzen,

ermittelt.

Vorteilhaft bei der Ausgestaltung der ersten Mittel ist weiterhin, wenn für den auf wenigstens zwei unterschiedliche Arten ermittelten Offsetwert des Fahrzeugsensors bei wenigstens zwei Arten zusätzlich zum Offsetwert ein Fehlerband ermittelt wird, welches die Angabe jeweils eines Minimalwertes und eines Maximalwertes für den jeweiligen Offsetwert erlaubt. Die Breite dieses Fehlerbandes kann ein Maß für die Größe des geschätzten absoluten Fehlers des Offsetwertes sein. Dies eröffnet vorteilhafte Möglichkeiten für die Ermittlung des korrigierten Offsetwertes des Fahrzeugsensors, da wenigstens eines der wenigstens zwei Fehlerbänder in die Ermittlung des korrigierten Offsetwertes einbezogen werden kann:

- Beispielsweise kann in den zweiten Mitteln die Ermittlung des korrigierten Offsetwertes des Fahrzeugsensors durch eine Mittelwertbildung zwischen dem Minimum aller Maximalwerte der auf mindestens zwei unterschiedliche Weisen gewonnenen Offsetwerte und dem Maximum aller Minimalwerte der auf mindestens zwei unterschiedliche Weisen gewonnenen Offsetwerte erfolgen.
- Beispielsweise kann in den zweiten Mitteln die Ermittlung des korrigierten Offsetwertes des Fahrzeugsensors durch eine gewichtete Mittelwertbildung zwischen den ermittelten Offsetwerten des Fahrzeugsensors erfolgen, wobei der Offsetwert mit wachsendem geschätztem absolutem Fehler bzw. wachsender Breite des Fehlerbandes ein geringeres Gewicht in der Mittelwertbildung erhält. Das bedeutet anschaulich, daß ein Offsetwert mit größerem geschätzten absolutem Fehler bzw. größerer Breite des Fehlerbandes ein geringeres Gewicht in der Mittelwertbildung erhält als ein Offsetwert mit kleinerem geschätztem Fehler bzw. kleinerer Breite des Fehlerbandes.

Weiter hat es sich als vorteilhaft erwiesen, wenn der mittels der zweiten Mittel ermittelte korrigierte Offsetwert in regelmäßigen oder nicht regelmäßigen Zeitabständen ermittelt wird.

Zeichnung

Ein Ausführungsbeispiel der Erfindung ist in der folgenden Zeichnung dargestellt und in der nachfolgenden Beschreibung näher erläutert.
Die Zeichnung besteht aus den Figuren 1 bis 7.

Fig. 1 zeigt schematisch ein Fahrzeugsteuerungssystem sowie dessen Ein- und Ausgabekanäle. Darin sind die für die vorliegende Erfindung maßgeblichen Funktionen eingezeichnet.

Fig. 2 zeigt eine spezielle Ausprägung der vorliegenden Erfindung für den Fall

- dass der Fahrzeugsensor ein Drehratensensor ist,
- dass die Ermittlung des Offsetwertes des Ausgangssignals des Drehratensensors abhängig vom Ausgangssignal der Drehratensensors selbst sowie von den Ausgangssignalen weiterer Sensoren ist, welche den Lenkradwinkel und die Raddrehzahlen erfassen und
- dass die Ermittlung des Offsetwertes des Ausgangssignals des Drehratensensors durch folgende vier Verfahren erfolgt:

    Stillstandsabgleichsverfahren, Lenkwinkelverfahren, Histogrammverfahren und Regressionsverfahrens.

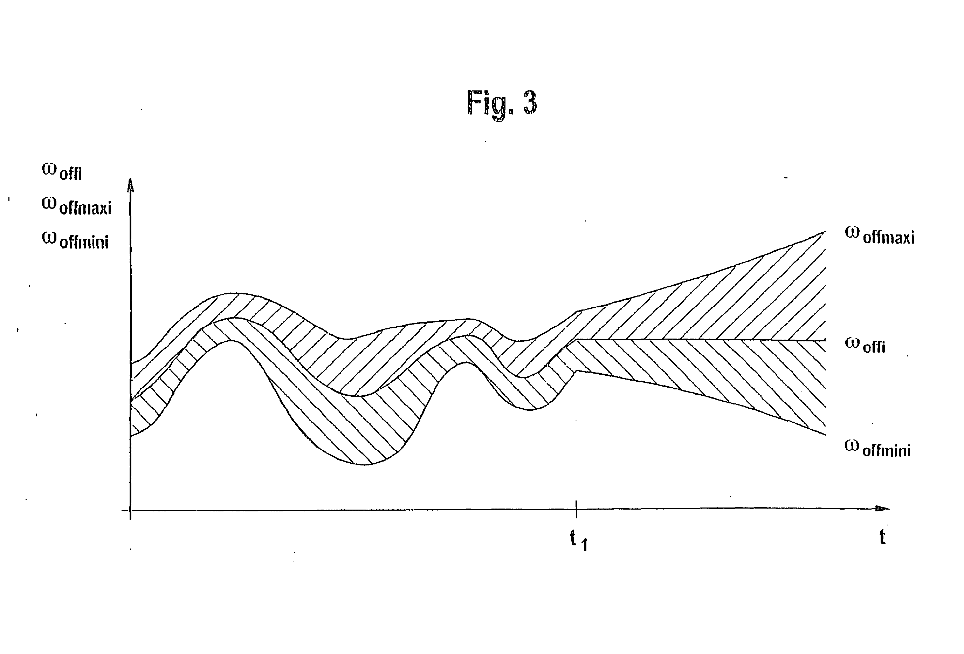

Fig. 3 zeigt in qualitativer Art und Weise den zeitlichen Verlauf eines ermittelten Gierratenoffsets sowie des zugehörigen Fehlerbandes.

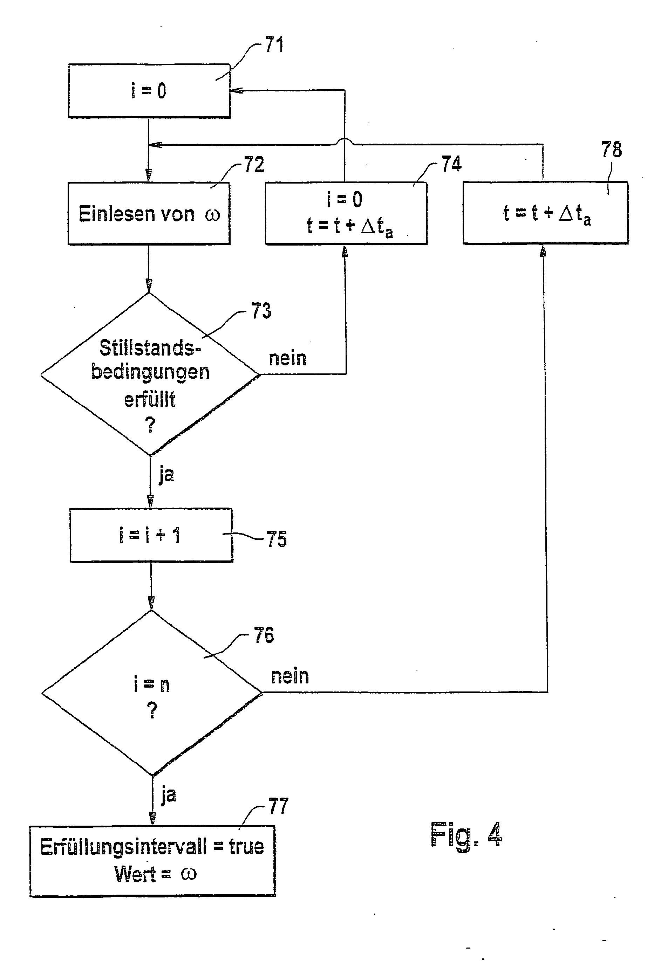

Fig. 4 zeigt in Form eines Flussdiagramms die Ermittlung eines Erfüllungsintervalls. Dieses wird für die Berechnung des Gierratenoffsetwertes mit dem Stillstandsabgleichsverfahren benötigt.

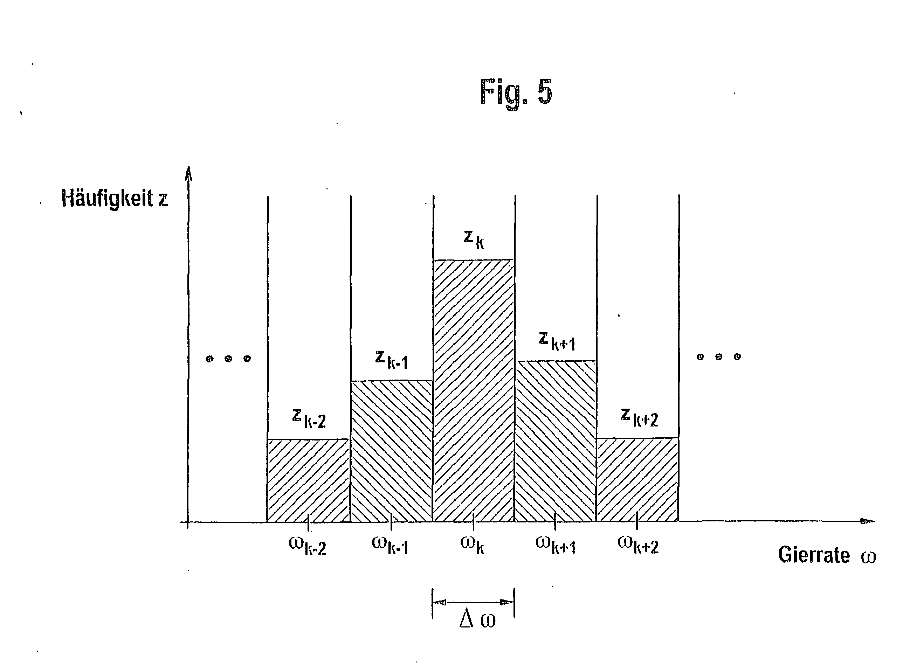

Fig. 5 zeigt in qualitativer Art und Weise ein Histogramm, wie es der Ermittlung des Offsetwertes durch das Histogrammverfahren zugrunde liegt.

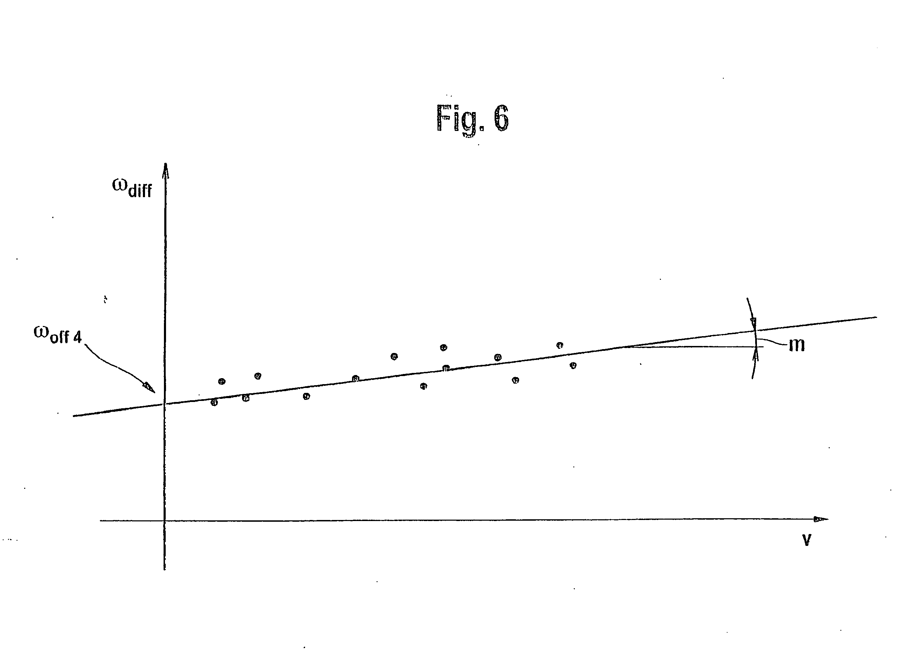

Fig. 6 zeigt in qualitativer Art und Weise eine x-y-Darstellung, wie sie der Ermittlung des Offsetwertes durch das Regressionsverfahren zugrunde liegt.

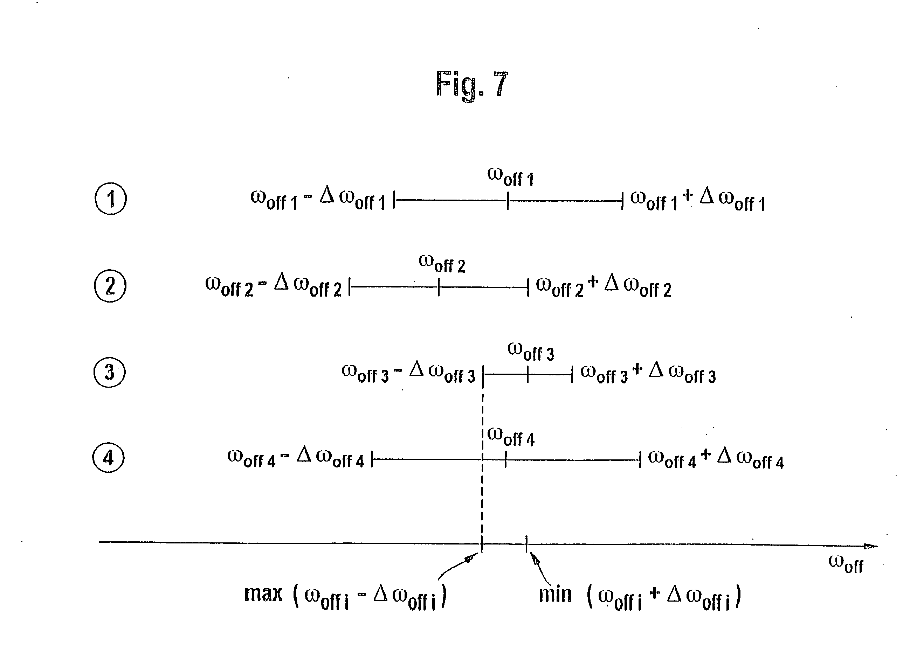

Fig. 7 zeigt in qualitativer Art und Weise für den Fall, dass bei den verschiedenen Verfahren neben dem Offsetwert zusätzlich ein Fehlerband ermittelt wird, wie der korrigierte Offsetwert durch eine Mittelwertbildung zwischen dem Minimum aller Maximalwerte und dem Maximum aller Minimalwerte ermittelt wird.

Ausführungsbeispiel

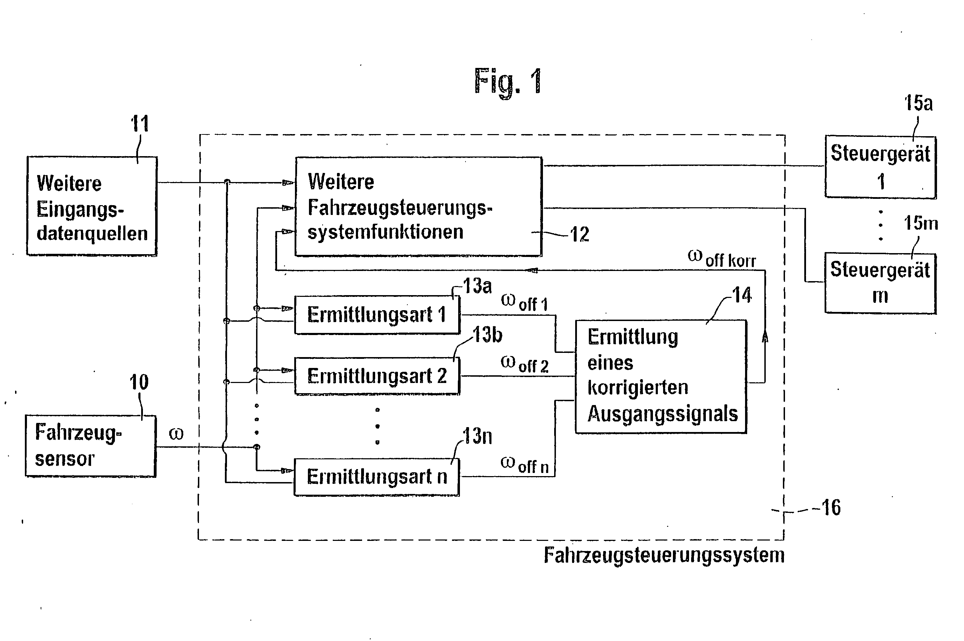

Die Erfindung soll anhand der Figuren 1 bis 7 beschrieben werden. Die spezielle Form des gewählten Ausführungsbeispiels - der Einsatz der erfindungsgemäßen Vorrichtung bzw. des erfindungsgemäßen Verfahrens in einem System zur automatischen Abstandsregelung in einem Kraftfahrzeug - soll keine Einschränkung der erfindungsgemäßen Idee darstellen.

In Fig. 1 sind in schematischer Art und Weise ein Fahrzeugsteuerungsystem 16 sowie die für die Erfindung wesentlichen Ein- und Ausgabekanäle dargestellt. Als Eingangssignale des Fahrzeugsteuerungssystems 16 stehen auf den Eingangskanälen die Ausgangssignale eines Fahrzeugsensors 10 sowie weitere Signale von nicht näher spezifizierten Eingangsdatenquellen 11 zur Verfügung.

Das Fahrzeugsteuerungssystem besteht

- aus den Blöcken 13a,...,13n, welche zur Ermittlung der den Offset des Ausgangssignals des Fahrzeugsensors 10 repräsentierenden Offsetwerte $\omega_{off1}$ ,..., $\omega_{offn}$ dienen,
- aus dem Block 14, in dem aus den in den Blöcken 13a,...,13n ermittelten Offsetwerten $\omega_{off1}$ ,..., $\omega_{offn}$ ein korrigierter Offsetwert $\omega_{offkorr}$ ermittelt wird und
- aus dem Block 12, welcher alle weiteren Funktionen des Fahrzeugsteuerungssystems 16 umfasst.

Die Ausgangssignale des Fahrzeugsteuerungssystems 16 gehen zu den m weiteren Steuergeräten 15a,... 15m. Diese m weiteren Steuergeräte können zum Beispiel in einer speziellen Ausprägung das Motorsteuergerät, das ESP-Steuergerät (ESP = Elektronisches Stabilitäts-Programm) oder die Getriebesteuerung umfassen. Weiterhin denkbar ist, daß die Ausgangssignale des Fahrzeugssteuerungssystems 16 an ein Fahrerinformationssystem weitergeleitet werden

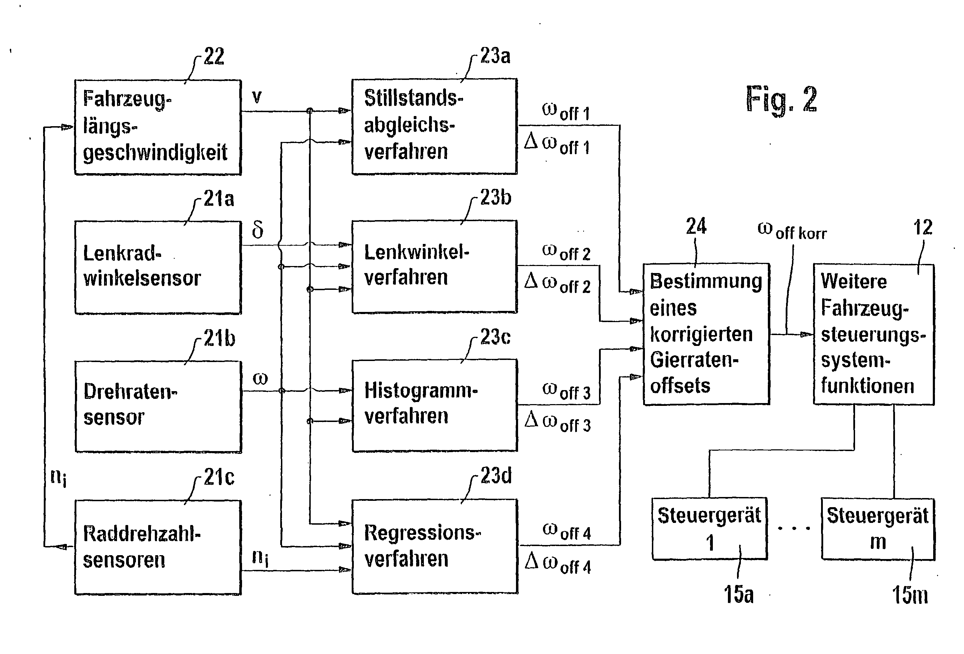

In Fig. 2 ist eine spezielle Ausprägung der vorliegenden Erfindung für den Fall eines Systems zur adaptiven Geschwindigkeitsregelung (ACC) dargestellt. Auch hier sind nur die für die Erfindung wesentlichen Sensoren sowie Ein- und Ausgangskanäle dargestellt. Die Radarsensoren sind beispielsweise nicht dargestellt.

In dieser speziellen Ausprägung ist der Fahrzeugsensor 10 als Drehratensensor 21b ausgebildet. Die weiteren Eingangsquellen 11 sind als Lenkradwinkelsensor 21a und als Raddrehzahlsensoren 21c ausgebildet.

Der Drehratensensor 21b liefert ein Ausgangssignal $\omega$, welches die Gierrate repräsentiert, der Lenkradwinkelsensor 21a liefert ein Ausgangssignal $\delta$, welches den Lenkradwinkel repräsentiert und die Raddrehzahlsensoren 21c liefern Ausgangssignale $n_i$, welche die Raddrehzahlen der einzelnen Räder repräsentieren.

Diese Ausgangssignale $\omega$, $\delta$ und $n_i$ sowie das die Fahrzeuglängsgeschwindigkeit repräsentierende Signal v gehen als Eingangssignale in das Fahrzeugsteuerungssystem 16 ein.

Die Fahrzeuglängsgeschwindigkeit wird dabei im allgemeinen nicht direkt durch einen Sensor erfasst, sondern wird aus den von den Raddrehzahlsensoren 21c gelieferten Signalen $n_i$, welche die Raddrehzahlen der einzelnen Räder repräsentieren, ermittelt. Diese Ermittlung kann beispielsweise im Steuergerät einer Fahrdynamikregelungsanlage (ESP) erfolgen.

Im Fahrzeugsteuerungssystem 16 erfolgt die Ermittlung des Offsetwertes des Ausgangssignals $\omega$ des Drehratensensors 21b auf folgende vier Arten:

- durch ein Stillstandsabgleichsverfahren 23a,
- durch ein Lenkwinkelverfahren 23b,
- durch ein Histogrammverfahren 23c und
- durch ein Regressionsverfahren 23d.

Das Stillstandsabgleichsverfahren 23a benötigt als Eingangssignale das die Fahrzeuglängsgeschwindigkeit repräsentierende Signal v sowie das die Gierrate repräsentierende Signal $\omega$. Der Lenkwinkelverfahren 23b benötigt neben diesen beiden Größen zusätzlich noch das den Lenkradwinkel repräsentierende Signal $\delta$. Als Eingangssignal für das Histogrammverfahren 23c werden das die Gierrate repräsentierende Signal $\omega$ sowie das die Fahrzeuglängsgeschwindigkeit repräsentierende Signal v benötigt. Das Regressionsverfahren 23d benötigt als Eingangssignale die die Raddrehzahlen repräsentierenden Signale $n_i$, das die Gierrate repräsentierende Signal $\omega$ sowie das die Fahrzeuglängs-

geschwindigkeit repräsentierende Signal v

Als Ausgangssignale liefert das Stillstandsabgleichsverfahren 23a ein Signal $\omega_{off1}$, welches einen Näherungswert für den Gierratenoffset des Drehratensensors 21b repräsentiert sowie ein weiteres Signal $\Delta\omega_{off1}$, welches die halbe Breite des zugehörigen Fehlerbandes repräsentiert. Das Lenkwinkelverfahren 23b liefert ein Signal $\omega_{off2}$, welches einen Näherungswert für den Gierratenoffset des Drehratensensors 21b repräsentiert sowie ein weiteres Signal $\Delta\omega_{off2}$, welches die halbe Breite des zugehörigen Fehlerbandes repräsentiert. Das Histogrammverfahren 23c liefert ein Signal $\omega_{off3}$, welches den Gierratenoffset des Drehratensensors 21b repräsentiert sowie ein weiteres Signal $\Delta\omega_{off3}$, welches die halbe Breite des zugehörigen Fehlerbandes repräsentiert. Das Regressionsverfahren 23d liefert ein Signal $\omega_{off4}$, welches den Gierratenoffset des Drehratensensors 21b repräsentiert sowie ein weiteres Signal $\Delta\omega_{off4}$, welches die halbe Breite des zugehörigen Fehlerbandes repräsentiert.

Bis jetzt wurde zwischen Signalen und den von den Signalen repräsentierten physikalischen Größen unterscheiden. Der übersichtlicheren Darstellung halber soll im folgenden diese Unterscheidung nicht mehr in aller Strenge beibehalten werden. Insbesondere sollen im folgenden die Größen $\omega$, $\delta$, $n_i$, $v$, $\omega_{off1}$, $\omega_{off2}$, $\omega_{off3}$, $\omega_{off4}$, $\Delta\omega_{off1}$, $\Delta\omega_{off2}$, $\Delta\omega_{off3}$ und $\Delta\omega_{off4}$ nicht mehr nur die Signale, sondern auch die von den Signalen repräsentierten Größen bezeichnen. Zur Unterscheidung dient die Regel, daß der entsprechenden Größe das Wort "Signal" vorangestellt ist, wenn damit das Signal und nicht die physikalische Größe gemeint ist.

Das Fehlerband ist ein Maß für den maximalen absoluten Fehler, mit dem die den Offset des Ausgangssignals des Drehratensensors 21b repräsentierende Größe behaftet ist.

Am Beispiel des Stillstandsabgleichverfahrens bedeutet dies dass der wahre Offsetwert des Gierratensensors mit hoher Wahrscheinlichkeit zwischen den Werten $(\omega_{off1}-\Delta\omega_{off1})$ und $(\omega_{off1} + \Delta\omega_{off1})$ liegt. Damit wird auch zugleich der Begriff der "halben Breite $\Delta\omega_{off1}$" anschaulich klar. Entsprechendes gilt auch für die Fehlerbänder bei den anderen drei Verfahren.

Aus diesen Näherungswerten $\omega_{off1},...,\omega_{off4}$ sowie den zugehörigen Breiten der Fehlerbänder wird im Mittel 24, welches eine spezielle Ausgestaltung des Mittels 14 darstellt, ein korrigierter Offsetwert $\omega_{offkorr}$ des Gierratensensors berechnet, welcher sich gegenüber den Größen $\omega_{off1},..., \omega_{off4}$ durch eine erhöhte Genauigkeit auszeichnet.

Dabei ist zu beachten, dass die vier verwendeten Verfahren, nämlich das Stillstandsabgleichsverfahren, dass Lenkwinkelverfahren, das Histogrammverfahren und das Regressionsverfahren jeweils unterschiedliche Gültigkeitsbereiche, abhängig vom Fahrzustand, haben. Das bedeutet dass, abhängig vom Fahrzustand, möglicherweise nicht alle vier verwendeten Verfahren zugleich die den Offsetwert repräsentierenden Größen ermitteln. Bei denjenigen Verfahren, welche momentan keine den Offsetwert repräsentierende Größen ermitteln, wird die zuletzt mit diesem Verfahren ermittelte, gültige, den Offsetwert repräsentierende Größe genommen. Zugleich wird das zu dieser Größe ermittelte Fehlerband zeitlich aufgeweitet. Das bedeutet, dass das zugehörige Fehlerband um so breiter wird, je länger die letzte gültige Ermittlung dieser den Offsetwert repräsentierenden Größe zurückliegt. Dieser Rückgriff auf den zuletzt ermittelten Offsetwert erfordert für jedes Verfahren eine Speicherung von mindestens dem zuletzt ermittelten Offsetwert sowie der zuletzt ermittelten Fehlerbandbreite.

Diese Aufweitung des Fehlerbandes ist in Fig. 3 in qualitativer Art und Weise dargestellt. In diesem x-y-Diagramm ist entlang der Abszisse die Zeit t aufgetragen, in Ordinatenrichtung sind die Größen $\omega_{offi}$, $\omega_{offmini}$ und $\omega_{offmaxi}$ aufgetragen. Dabei kennzeichnet $\omega_{offi}$ den durch das i-te Verfahren ermittelten Offsetwert des Gierratensensors. $\omega_{offmini}$ ist der durch das Fehlerband definierte Minimalwert, d.h. $\omega_{offmini} = \omega_{offi} -\Delta\omega_{offi}$ und $\omega_{offmaxi}$ ist der durch das Fehlerband definierte Minimalwert, d.h. $\omega_{offmaxi} = \omega_{offi} + \Delta\omega_{offi}$. Es soll noch darauf hingewiesen werden, dass es durchaus möglich ist, für die Bestimmung von $\omega_{offmini}$ und $\omega_{offmaxi}$ aus $\omega_{offi}$ unterschiedliche $\Delta\omega_{offi}$ zu verwenden, d.h. $\omega_{offi}$ liegt nicht mehr exakt in der Mitte zwischen $\omega_{offmini}$ und $\omega_{offmaxi}$. Dies kann auch durch die Einführung von Gewichtungsfaktoren erreicht werden, d.h. $\omega_{offmini} = \omega_{offi} -c_1{}^*\Delta\omega_{offi}$ und $\omega_{offmaxi} = \omega_{offi} + c_2{}^*\Delta\omega_{offi}$. Dabei sind $c_1$ und $c_2$ unterschiedliche Gewichtungsfaktoren, welche konstant sein können, aber auch von Parametern wie beispielsweise der Zeit abhängen können. Der Gültigkeitsbereich für das i-te Verfahren erstrecke sich von der Zeit $t=0$ bis zur Zeit $t = t_1$. Für Zeiten $t > t_1$ seien die Gültigkeitsvoraussetzungen nicht mehr erfüllt. Deshalb werden für $t > t_1$ keine weiteren Offsetwerte mehr ermittelt, sondern es wird auf den zur Zeit $t_1$ ermittelten Offsetwert zurückgegriffen. Das Fehlerband, gegeben durch die Werte $\omega_{offmini}$ und $\omega_{offmaxi}$, wird danach für $t > t_1$ kontinuierlich aufgeweitet.

Der ermittelte korrigierte Offsetwert $\omega_{offkorr}$ wird einem weiteren Block 12 zugeleitet, in welchem weitere Funktionen des Fahrzeugsteuerungssystems implementiert sind. Block 12 hat neben anderen nicht in Fig. 2 eingezeichneten Größen auch die Größe $\omega_{offkorr}$ als Eingangssignal.

Im folgenden wird näher auf die Blöcke 23a, 23b, 23c und 23d eingegangen, welche die den Offset des Ausgangssignals des Drehratensensors 21b repräsentierenden Größen $\omega_{off1},...,\omega_{off4}$ liefern.

Das Stillstandsabgleichsverfahren 23a stellt unabhängig vom momentanen Bewegungszustand des Fahrzeugs, also insbesondere auch im Falle eines nicht stillstehenden Fahrzeuges, die den Offset des Ausgangssignals des Drehratensensors 21b repräsentierende Größen $\omega_{off1}$ zur Verfügung.

Der Fall des Stillstands wird festgestellt, wenn die folgenden drei Bedingungen a), b) und c) zugleich erfüllt sind:

a) Die Längsgeschwindigkeit des Fahrzeugs ist kleiner als ein erster vorgegebener Maximalwert, welcher als Grenzgeschwindigkeit $v_G$ bezeichnet wird.

b) Die Gierrate $\omega$ ist kleiner als ein zweiter vorgegebener Maximalwert.

c) Die Gierbeschleunigung, das ist die zeitliche Ableitung der Gierrate, ist kleiner als ein dritter vorgegebener Maximalwert.

Bei einer sehr geringen Fahrzeuglängsgeschwindigkeit v können die dann vorliegenden sehr kleinen Raddrehzahlen $n_i$ von den Raddrehzahlsensoren nicht mehr erfasst werden und werden fälschlicherweise als Null erkannt. Dadurch wird in einer im Fahrzeug befindlichen Vorrichtung zur Ermittlung der Fahrzeuglängsgeschwindigkeit diese fälschlicherweise als verschwindend ermittelt. Die Grenzgeschwindigkeit $v_G$ ist diejenige Längsgeschwindigkeit des Fahrzeugs, welche eben noch als nicht verschwindend erkannt wird. Für jede Längsgeschwindigkeit kleiner als die Grenzgeschwindigkeit $v_G$ wird fälschlicherweise die Längsgeschwindigkeit Null ermittelt.

Durch die Punkte b) und c) wird sichergestellt, dass ein Fahrzeug, welches mit verschwindender Längsgeschwindigkeit auf einer drehenden Platte steht, nicht als stillstehend erfasst wird.

Für den Stillstandsabgleich wird das Ausgangssignal $\omega$ des Drehratensensors 21b zu regelmäßigen diskreten Abtastzeitpunkten $t_i$ mit konstanten Zeitabständen $\Delta t_a$ in Block 23a eingelesen. Zugleich wird zu diesen Abtastzeitpunkten $t_i$ geprüft, ob die den Stillstand definierenden Bedingungen a), b) und c) erfüllt sind. Außerdem wird ein Zeitintervall $T_n = n \cdot \Delta t_a$ festgelegt, wobei n eine ganze Zahl größer als 2 ist. Sind die den Stillstand definierenden Bedingungen a), b) und c) während eines Zeitintervalls $T_n$ zu allen in dieses Intervall fallenden Abtastzeitpunkten $t_i$ erfüllt, dann gilt der Stillstandsfall als gegeben. Ein solches Zeitintervall $T_n$, in welchem die den Stillstand definierenden Bedingungen a), b) und c) alle zugleich zu jedem in dieses Intervall fallenden Abtastzeitpunkt erfüllt sind, wird im folgenden als Erfüllungsintervall bezeichnet.

Der Verfahrensablauf zur Detektion eines Erfüllungsintervalls ist in Fig. 4 dargestellt. In Block 71 wird die ganzzahlige Variable i=0 gesetzt. Anschliessend wird in Block 72 das Ausgangssignal $\omega$ des Gierratensensors eingelesen. In Block 73 wird geprüft, ob alle drei Stillstandsbedingungen a), b) und c) zugleich erfüllt sind. Ist dies der Fall, dann wird in Block 75 die Zahl i um 1 inkrementiert. Ist dies nicht der Fall, dann wird in Block 74 i = 0 gesetzt und zugleich zu einem um den Zeitabstand $t_a$ späteren Zeitpunkt erneut mit Block 71 begonnen. Die Variable i gibt die Zahl der ununterbrochenen Erfüllungen aller drei den Stillstand definierenden Bedingungen a), b) und c) an. In Block 76 wird geprüft, ob diese Zahl i der ununterbrochenen Erfüllungen den Wert n erreicht hat. Falls dies der Fall ist, wird im Block 77 durch "Erfüllungsintervall=true" die Detektion eines Erfüllungsintervalls dokumentiert. Zugleich wird der Variablen "Wert" der aktuellste Wert $\omega$ des Ausgangssignals des Gierratensensors zugewiesen. Dabei handelt es sich im Ausführungsbeispiel um einen gefilterten Wert. Hat in Block 76 die Zahl i den Wert n noch nicht erreicht, dann wird zu einem um den Zeitabstand $t_a$ späteren Zeitpunkt (Block 78) erneut in Block 72 das Ausgangssignal des Gierratensensors $\omega$ eingelesen.

Sobald ein Erfüllungsintervall detektiert wurde, ist es vorteilhaft, die Länge der folgenden Zeitintervalle zu verkürzen. An die Stelle des Zeitintervalls $T_n$ tritt jetzt das kürzere Zeitintervall $T_m$ mit der Länge Zeitintervall $T_m = m \cdot \Delta t_a$ wobei m eine ganze Zahl kleiner als n ist. Erst wenn erneut der Fall des Nichtstillstandes detektiert wird, geht man wieder auf das längere Zeitintervall $T_n = n \cdot \Delta t_a$ zurück und behält diese Länge des Zeitintervalls wieder solange bei, bis erneut ein Erfüllungsintervall detektiert wird.

Für die Ermittlung des Offsetwertes $\omega_{off1}$ in Block 23a wird jeweils das letzte abgetastete Signal $\omega$ des vorletzten Erfüllungsintervalls verwendet. Eine Ausnahme bildet hier lediglich das erste Erfüllungsintervall, welches sich auch durch die größere Länge $T_a = n \cdot \Delta t_a$ auszeichnet. Da hier kein direkt vorhergehendes Erfüllungsintervall vorliegt, wird hier für die Ermittlung des Offsetwertes $\omega_{off1}$ in Block 23a das letzte abgetastete Signal $\omega$ in diesem Erfüllungsintervall verwendet. Anstelle des letzten abgetasteten Signals kann dabei auch ein gefiltertes oder gemitteltes oder sowohl gefiltertes als auch gemitteltes Signal verwendet werden.

Zur anschaulichen Erläuterung der Arbeitsweise des Stillstandsabgleichs in Block 23a werde die folgende geradlinige Fahrzeugbewegung mit verschwindender Gierrate und verschwindender Gierbeschleunigung betrachtet:

Phase 1: Das Fahrzeug fährt mit konstanter Längsgeschwindigkeit

Phase 2: Das Fahrzeug beginnt zu bremsen. Die Fahrzeuglängsgeschwindigkeit ist noch größer als die in a) definierte Grenzgeschwindigkeit $v_G$.

Phase 3: Der Bremsvorgang klingt aus. Die Fahrzeuglängsgeschwindigkeit ist bereits kleiner als die Grenzgeschwindigkeit $v_G$.

Phase 4: Das Fahrzeug befindet sich exakt im Stillstand.

Phase 5: Das Fahrzeug beginnt zu beschleunigen. Die Fahrzeuglängsgeschwindigkeit ist noch kleiner als die Grenzgeschwindigkeit $v_G$.

Phase 6: Der Beschleunigungsvorgang ist fortgeschritten. Die Fahrzeuglängsgeschwindigkeit ist größer als die Grenzgeschwindigkeit $v_G$.

In Phase 1 und Phase 2 sind Bedingung a) nicht erfüllt.
Das Fahrzeug befindet sich nicht im Stillstand.
In Phase 3 sind alle drei Bedingungen erfüllt, deshalb wird der Fall des Stillstands angenommen, obwohl das Fahrzeug noch im Ausrollen begriffen war. Um die Weiterverarbeitung der ersten dort ermittelten Signale $\omega$ als den Fahrzeugstillstand repräsentierende Signale zu vermeiden, wurde das Zeitintervall $T_n$ eingeführt.
Die Länge des Zeitintervalls $T_n$ wird durch die erforderliche Berücksichtigung des Ausrollens bei Bremsvorgängen unterhalb der in a) definierten Grenzgeschwindigkeit $v_G$ sowie die erforderliche Berücksichtigung von Filterlaufzeiten des Signals $\omega$ in Block 23a festgelegt. Idealerweise ist die Länge des Zeitintervalls $T_n$ länger als eine angenommene realistische Dauer der Phase 3 sowie die Filterlaufzeiten.
In Phase 4 sind alle 3 Bedingungen a), b) und c) zu allen Abtastzeitpunkten $t_i$ erfüllt.
Deshalb wird, jetzt, jeweils über kürzere Zeitintervalle $T_m$, das Ausgangssignal des Drehratensensors 21b in Block 23a eingelesen und daraus der Gierratenoffset $\omega_{off1}$ aus dem vorletzten Erfüllungsintervall ermittelt.
Auch in Phase 5 sind alle 3 Bedingungen a), b) und c) zu allen Abtastzeitpunkten erfüllt, obwohl das Fahrzeug nicht mehr im Stillstand ist. Der Gierratenoffset $\omega_{off1}$ wird allerdings aus dem vorletzten Erfüllungsintervall ermittelt, welches noch idealerweise in die Phase 4 fällt, in welcher noch ein real stillstehendes Fahrzeug vorlag.
In Phase 6 sind nicht mehr die 3 Bedingungen a), b) und c) zugleich erfüllt, deshalb wird das Fahrzeug als nicht mehr im Stillstand befindlich angenommen und es werden keine weiteren Offsetwerte $\omega_{off1}$ ermittelt. Da sich das Fahrzeug nun in Bewegung befindet, können solange keine weiteren Offsetwerte $\omega_{off1}$ mehr ermittelt werden, bis ein erneuter Fahrzeugstillstand, charakterisiert durch die Erfüllung aller drei Bedingungen a), b) und c), eintritt.
Das Stillstandsabgleichsverfahren arbeitet auch beim nicht als stillstehend detektierten Fahrzeug. Im Fall des nicht als stillstehend detektierten Fahrzeuges wird der zuletzt ermittelte gültige Offsetwert $\omega_{off1}$ aus einem Speicher ausgelesen und weiter verwendet.
Allerdings wird das Fehlerband mit der halben Breite $\Delta\omega_{off1}$ nun zeitlich aufgeweitet. Das bedeutet anschaulich, dass ein umso breiteres Fehlerband angenommen wird, je mehr Zeit seit der letzten gültigen Ermittlung des Offsetwertes $\omega_{off1}$ verstrichen ist.
Im Gegensatz zum Stillstandsabgleichsverfahren arbeitet das Lenkwinkelverfahren nur beim nicht stillstehenden Fahrzeug. Grundlage der Berechnung des Gierratenoffsets beim Lenkwinkelverfahren ist die Beziehung

$$\omega_{LWS} = \frac{1}{i_L \cdot l} \cdot \frac{v}{1 + \dfrac{v^2}{v_{ch}^2}} \cdot \delta \qquad , \qquad (1)$$

welche aus der Fachliteratur bekannt ist (siehe z.B. "Bosch - Kraftfahrtechnisches Taschenbuch", 23. Auflage, Seite 707). Neben der Fahrzeuglängsgeschwindigkeit $v$ und dem Lenkradwinkel $\delta$ gehen in diese Beziehung die Lenkübersetzung $i_L$, eine charakteristische Fahrzeuggeschwindigkeit $v_{ch}$ und der Radstand 1 ein. Mit Lenkübersetzung ist die mechanische Übersetzung zwischen dem Lenkradwinkel $\delta$ und dem Lenkwinkel der Vorderräder bezeichnet.
Der Offset $\omega_{off2}$ ergibt sich als Differenz zwischen der aus obiger Beziehung (1) berechneten Gierrate $\omega_{LWS}$ und der vom Gierratensensor gemessenen Gierrate $\omega$.
Neben der Berechnung eines Offsetwertes $\omega_{off2}$ erlaubt Beziehung (1) auch die Berechnung der Breite eines Fehlerbandes über das Fehlerfortpflanzungsgesetz.
Das in Fig. 5 dargestellte Histogrammverfahren beruht auf einer statistischen Auswertung der durch den Drehratensensor 21b gelieferten Gierratensignale $\omega$. Dabei werden nur diskrete Gierratenwerte ..., $\omega_{k-1}$, $\omega_k$, $\omega_{k+1}$,... mit konstanten diskreten Abständen $\Delta\omega$ betrachtet. Es ist also $\omega_{k-1} = \omega_k - \Delta\omega$ und $\omega_{k+1} = \omega_k + \Delta\omega$. Jedem dieser diskreten Gierratenwerte wird ein Intervall der Breite $\Delta\omega$, in dessen Mitte der diskrete Gierratenwert liegt, zugeordnet. Zum Gierratenwert $\omega_k$ gehört damit das Intervall mit der unteren Grenze $\omega_k - \Delta\omega/2$ und der oberen Grenze $\omega_k + \Delta\omega/2$. Diese Intervalle werden im folgenden als Klassen bezeichnet.
Alle durch den Drehratensensor 21b gemessenen Werte der Gierrate werden nun der zugehörigen Klasse zugeordnet.
Damit erhält man das in Fig. 5 dargestellte Histogramm, welche auf der x-Achse die Klassen angibt und auf der y-Achse die Anzahl der in jede Klasse fallenden Gierratenwerte. Der Gierratenoffsetwert $\omega_{off3}$ kann aus diesem Histogramm auf verschiedene Arten bestimmt werden:

a) der Mittelwert der Klasse mit dem höchsten Zählerstand wir als Gierratenoffset weitergegeben oder

b) Der Gierratenoffset wird durch die Bildung eines gewichteten Mittelwertes aus der Klasse mit dem höchsten Zählerstand und den jeweils n benachbarten Klassen auf der linken und auf der rechten Seite gebildet. Dies geschieht durch die Beziehung

$$\omega_{off3} = \frac{\sum_{i=k-n}^{i=k+n} z_i \omega_i}{\sum_{i=k-n}^{i=k+n} z_i}$$

Dabei ist k der Index der Klasse mit dem höchsten Zählerstand, $\omega_i$ der Gierratenmittelwert der durch den Index i gekennzeichneten Klasse und $z_i$ der Zählerstand der durch den Index i gekennzeichneten Klasse.

c) Der Gierratenoffset wird durch die Bildung eines gewichteten Mittelwertes über alle Klassen gebildet. Dies kann durch eine lineare Berücksichtigung der Zählerstände mit

$$\omega_{off3} = \frac{\sum_{alle\ i} z_i \cdot \omega_i}{\sum_{alle\ i} z_i}$$

oder durch eine quadratische Berücksichtigung der Zählerstände mit

$$\omega_{off3} = \frac{\sum_{alle\ i} z_i^2 \cdot \omega_i}{\sum_{alle\ i} z_i}$$

erfolgen. Die quadratische Berücksichtigung der Zählerstände eignet sich insbesondere zur Unterdrückung von auftretenden Nebenmaxima der Gierrate im Histogramm.

Das Fehlerband kann beispielsweise als umso schmaler bestimmt werden, je ausgeprägter das Maximum des Histogramms ist.

Beim Histogrammverfahren empfiehlt es sich, für die Betrachtung lediglich Gierratenwerte bis zu einem vorzugebenden maximalen Betragswert zu betrachten. Weiterhin sollten aus dem Histogrammverfahren lediglich dann Offsetwerte ermittelt werden, wenn die Fahrzeuglängsgeschwindigkeit eine vorzugebende Größe überschreitet. Sollten diese Bedingungen nicht erfüllt sein, dann wird für das Histogrammverfahren der damit zuletzt ermittelte gültige Offsetwert verwendet, wobei sich das zugeordnete Fehlerband mit wachsendem zeitlichem Abstand aufweitet. Da das Histogrammverfahren ein statistisches Verfahren ist, benötigt es eine genügend große Anzahl von Meßwerten. Deshalb werden bei einem Start des Fahrzeuges die Histogrammwerte des letzten Zündungszyklus als Initialisierungswerte eingelesen.

Die Auffüllung der einzelnen Klassen im Histogramm kann beispielsweise durch einfaches Aufsummieren der Anzahl der den einzelnen Klassen zuzuordnenden Gierratenwerte erfolgen. Im Ausführungsbeispiel erfolgt die Auffüllung der einzelnen Klassen im Histogramm allerdings nicht durch einfaches Aufsummieren der Anzahl der den einzelnen Klassen zuzuordnenden Gierratenwerte, sondern durch Tiefpassfilterung mit Exponentialcharakteristik. Die Werte $z_i$ bewegen sich dadurch stets zwischen 0 und dem Filtereingangswert $z_{FE}$, welcher beispielsweise $z_{FE} = 1$ sein kann. $z_i = 0$ bedeutet eine leere Klasse. Nimmt $z_i$ den Filtereingangswert $z_{FE}$, also beispielsweise $z_{FE} = 1$ an, bedeutet dies unendlich viele Einträge in dieser Klasse. Der Zählerstand $z_i = Z_{FE}$ in einer Klasse, also z.B. $z_{FE} = 1$, kann damit niemals erreicht werden, es können lediglich Werte beliebig nahe dem Filtereingangswert, also z.B. 1, erreicht werden. Dadurch wird ein Überlaufen der Klassen bei zu vielen Einträgen vermieden.

Fig. 6 zeigt qualitativ ein mit dem Regressionsverfahren erhaltenes xy-Diagramm. Auf der x-Achse ist dabei die Fahrzeuglängsgeschwindigkeit v und auf der y-Achse eine Größe $\omega_{diff}$ aufgetragen. Diese Größe $\omega_{diff}$ ergibt sich durch $\omega_{diff} = \omega - \omega_{comp}$. Dabei ist $\omega$ die vom Drehratensensor gemessene Gierrate und $\omega_{comp}$ eine aus den Raddrehzahlen ermittelte Gierrate, gegeben durch

$$\omega_{comp} = \frac{\dfrac{v_r}{r + \Delta r_r} \cdot r - \dfrac{v_l}{r + \Delta r_l} \cdot r}{b} .$$

Dabei sind $v_l$ und $v_r$ die tatsächlichen Radgeschwindigkeiten am linken und rechten Rad der nicht angetriebenen Achse, r ist der Nominalwert des Radradius, $r + \Delta r_l$ ist der tatsächliche Radius des linken Rades der nicht angetriebenen Achse, $r + \Delta r_r$ ist der tatsächliche Radius des rechten Rades der nicht angetriebenen Achse, b ist die Spurbreite.

Diese Ermittlung von $\omega_{comp}$ beruht darauf, daß während einer Kurvenfahrt unterschiedliche Raddrehzahlen der Innen- und Außenräder vorliegen.

Durch analytische Betrachtungen läßt sich zeigen, dass zwischen $\omega_{diff}$ und v näherungsweise ein linearer Zusammenhang $\omega_{diff} = \omega_{off} + m*v$ besteht. Dabei kennzeichnet $\omega_{off}$ den y-Achsendurchstoßpunkt und m die Steigung, welche zudem von den Radradien und der Spurbreite abhängt. Für die Steigung m gilt näherungsweise die Formel

$$m = \frac{1}{b} \cdot \left( \frac{\Delta r_r}{r} - \frac{\Delta r_l}{r} \right) . \qquad (2)$$

Zu diskreten Zeitpunkten wird durch Messung von v und Ermittlung von $\omega_{diff}$ jeweils ein neuer Punkt in das xy-Diagramm eingetragen. Durch diese Punkte wird nun eine Regressionsgerade gelegt. Von dieser Regressionsgeraden werden der y-Achsendurchstoßpunkt und die Steigung m ermittelt. Der y-Achsendurchstoßpunkt stellt den Gierraten-offset $\omega_{off4}$ dar und aus der Steigung m lassen sich über die Gleichung (2) Unterschiede in den Radradien der nicht angetriebenen Räder ermitteln. Diese Unterschiede können durch Reifentoleranzen bedingt sein. Die Ermittlung dieser Unterschiede kann zur Einsparung eines Reifentoleranzabgleiches führen.

Hat die Steigung m den Wert Null, dann haben die nicht angetriebenen Räder dieselben Radradien.

Da die Berechnung von $\omega_{comp}$ nur für schlupffreie Räder gilt, sollten beim Regressionsverfahren die Räder der nicht angetriebenen Achse betrachtet werden.

Voraussetzung für die Gültigkeit des Regressionsverfahrens sind die folgenden drei Bedingungen:

1) Die Fahrzeuglängsgeschwindigkeit ist größer als eine vorgegebene Grenzgeschwindigkeit
2) Die Gierrate $\omega$ ist kleiner als eine vorgegebene Grenzgierrate
3) Die Fahrzeugquerbeschleunigung $a_y$ ist kleiner als eine vorgegebene Grenzquerbeschleunigung
Durch Punkt 1) wird sichergestellt, dass das Regressionsverfahren nicht bei Fahrzeugstillstand arbeitet.
Durch die Punkte 2) und 3) wird sichergestellt, dass sich das Fahrzeug nicht in einem fahrdynamischen Grenzbereich bewegt.

Das Regressionsverfahren erfordert eine Geschwindigkeitsvariation. Ist diese Geschwindigkeitsvariation zu gering, d.h. die Punkte im xy-Diagramm liegen in x-Achsenrichtung zu gedrängt, dann wird das Ergebnis ungenau. Das Fehlerband berücksichtigt beispielsweise die Varianz und den Mittelwert der Werte der Fahrzeuglängsgeschwindigkeit.

Aus den ermittelten Offsetwerten $\omega_{off1},...,\omega_{off4}$ sowie den zugehörigen Fehlerbändern mit den halben Breiten $\Delta\omega_{off1},...,\Delta\omega_{off4}$ wird in Block 24 ein korrigierter Offsetwert $\omega_{offkorr}$ ermittelt.

Die Ermittlung des korrigierten Offsetwertes kann auf verschiedene Arten erfolgen. Beispielsweise kann, wie in Fig. 7 dargestellt, der korrigierte Offsetwert als Mittelwert vom Minimum der Maximalwerte und vom Maximum der Minimalwerte ermittelt werden. Dazu werden aus dem durch das i-te Verfahren ermittelten Offsetwert $\omega_{offi}$ sowie dem zugehörigen Fehlerband mit der halben Breite $\Delta\omega_{offi}$ ein Minimalwert $\omega_{offi}-\Delta\omega_{offi}$ und ein Maximalwert $\omega_{offi} + \Delta\omega_{offi}$ berechnet. Nun werden entlang der $\omega$-Achse die Minimal- und Maximalwerte aller 4 Verfahren aufgetragen. Unter den 4 aufgetragenen Minimalwerten wird der größte Minimalwert (in Fig. 7 gekennzeichnet max($\omega_{offi} - \Delta\omega_{offi}$)) ermittelt. Ebenso wird unter den 4 aufgetragenen Maximalwerten der kleinste Maximalwert (in Fig. 7 gekennzeichnet min ($\omega_{offi} + \Delta\omega_{offi}$))

ermittelt. Für den Fall, dass der größte Minimalwert kleiner als der kleinste Maximalwert ist, existiert eine gemeinsame Schnittmenge aller 4 Verfahren mit dem größten Minimalwert als unterer Grenze und dem kleinsten Maximalwert als oberer Grenze.

Durch die Mittelwertbildung zwischen dem Minimum aller Maximalwerte und dem Maximum aller Minimalwerte wird der Mittelpunkt der Schnittmenge ermittelt und als korrigierter Offsetwert $\omega_{offkorr}$ verwendet. Dieses Verfahren ist auch für den Fall anwendbar, dass keine gemeinsame Schnittmenge existiert, d.h. dass der größte Minimalwert größer als der kleinste Maximalwert ist.

Alternativ kann der korrigierte Offsetwert auch durch eine gewichtete Mittelwertbildung aus allen vier ermittelten Offsetwerten gewonnen werden. Hierbei ist es vorteilhaft, dass bei der gewichteten Mittelwertbildung das Gewicht desjenigen Offsetwertes am größten ist, dessen Fehlerbandbreite am kleinsten ist. Dies kann zum Beispiel durch die folgende gewichtete Mittelwertbildung geschehen:

$$\omega_{offkorr} = \frac{\sum_{i=1}^{4} \left( \frac{\omega_{off\,i}}{\Delta\omega_{off\,i}} \right)}{\sum_{i=1}^{4} \left( \frac{1}{\Delta\omega_{off\,i}} \right)} \quad .$$

Die Ermittlung des korrigierten Offsetwertes des Drehratensensors sollte in regelmäßigen oder auch in nicht regelmäßigen Zeitabständen wiederholt werden. Dabei erweisen sich in der Praxis Zeitabstände der Größenordnung 0.1 Sekunden bis 1 Sekunde als vorteilhaft.

**Patentansprüche**

1. Vorrichtung zur Ermittlung eines korrigierten Offsetwertes ($\omega_{offkorr}$), der den Offset des Ausgangssignals ($\omega$) eines ersten Fahrzeugsensors (10) repräsentiert, wobei der Sensor (10) wenigstens eine Bewegung eines Fahrzeugs erfasst,
   **dadurch gekennzeichnet,**
   **dass** erste Mittel (13a,...,13n) vorgesehen sind,

   - mittels der wenigstens zwei den Offset des Sensors (10) repräsentierende Offsetwerte ($\omega_{off1}$, - - - ,$\omega_{offn}$) auf wenigstens zwei unterschiedliche Arten ermittelt werden und
   - für wenigstens einen der ermittelten Offsetwerte des Sensors zusätzlich zum Offsetwert ein Fehlerband ermittelt wird,

   und **dass** zweite Mittel (14) vorgesehen sind,

   - mittels der abhängig von den ermittelten Offsetwerten ($\omega_{off1}$,...,$\omega_{offn}$) und wenigstens einem der Fehlerbänder der korrigierte Offsetwert ($\omega_{offkorr}$) ermittelt wird.

2. Vorrichtung nach Anspruch 1, **dadurch gekennzeichnet, dass** durch die Fehlerbänder die Angabe jeweils eines Minimalwertes und eines Maximalwertes für den jeweiligen Offsetwert ermöglicht wird.

3. Vorrichtung nach Anspruch 2, **dadurch gekennzeichnet, dass** die Ermittlung des korrigierten Offsetwertes ($\omega_{offkorr}$) des Fahrzeugsensors (10) durch eine Mittelwertbildung zwischen dem Minimum aller Maximalwerte (min($\omega_{offi}+\Delta\omega_{offi}$)) und dem Maximum aller Minimalwerte (max($\omega_{offi}-\Delta\omega_{offi}$)) der auf mindestens zwei unterschiedliche Weisen gewonnenen Minimalwerte und Maximalwerte der Offsetwerte des Fahrzeugsensors (10) erfolgt.

4. Vorrichtung nach Anspruch 1, **dadurch gekennzeichnet, dass** die Ermittlung des korrigierten Offsetwertes ($\omega_{offkorr}$) des Fahrzeugsensors (10) durch eine gewichtete Mittelwertbildung zwischen den ermittelten Offsetwerten des Fahrzeugsensors (10) erfolgt, wobei der Offsetwert mit wachsender Breite des Fehlerbandes ein geringeres Gewicht in der Mittelwertbildung erhält.

5. Vorrichtung nach Anspruch 1, **dadurch gekennzeichnet, dass** wenigstens ein Fehlerband um so breiter wird, je länger die letzte Ermittlung des zugehörigen Offsetwertes zurückliegt.

6. Vorrichtung nach Anspruch 1, **dadurch gekennzeichnet,**

   - **dass** jede der unterschiedlichen Arten der Ermittlung von Offsetwerten ($\omega_{off1}$,...,($\omega_{offn}$) einen vom Fahrzustand abhängigen zugeordneten Gültigkeitsbereich aufweist,
   - für diejenigen Arten, welche momentan infolge des vorliegenden Fahrzustandes außerhalb ihres Gültigkeitsbereiches sind und keine den Offsetwert repräsentierende Größe ($\omega_{off1}$,...,$\omega_{offn}$) ermitteln, die innerhalb des letzten Vorliegens des Gültigkeitsbereiches zuletzt mit dieser Art ermittelte, den Offsetwert repräsentierende Größe genommen wird und
   - das zugehörige Fehlerband um so breiter wird, je länger diese letzte gültige Ermittlung dieser den Offsetwert repräsentierenden Größe zurückliegt.

7. Vorrichtung nach Anspruch 1, **dadurch gekennzeichnet, dass** der Fahrzeugsensor (10) die Gierbewegung des Fahrzeugs erfasst.

8. Vorrichtung nach Anspruch 7, **dadurch gekennzeichnet, dass** der ermittelte korrigierte Offsetwert ($\omega_{offkorr}$) zur automatischen Abstandsregelung und/oder -steuerung (ACC) bei dem Kraftfahrzeug herangezogen wird.

9. Vorrichtung nach Anspruch 1, **dadurch gekennzeichnet, dass** die Ermittlung der Offsetwerte ($\omega_{off1}$,..,$\omega_{offn}$) abhängig von Ausgangssignalen von weiteren Sensoren (11), die die Bewegung des Fahrzeugs erfassen, und/oder des Fahrzeugsensors (10) geschieht, wobei insbesondere vorgesehen ist, dass die Ausgangssignale

   - die Raddrehzahlen ($n_i$) wenigstens eines Fahrzeugrades und/oder
   - den Lenkradwinkel (5) des Fahrzeugs und/oder
   - die Gierrate ($\omega$) des Fahrzeugs repräsentieren.

10. Vorrichtung nach Anspruch 1, **dadurch gekennzeichnet, dass** die ersten Mittel (13a,...,13n) derart ausgestaltet sind, dass auf wenigstens eine Art ein Offsetwert ($\omega_{offi}$) abhängig von dem momentan vorliegenden Betriebszustand des Fahrzeugs ermittelt wird, wobei insbesondere vorgesehen ist, dass
    der momentan vorliegende Betriebszustand durch

    - die Fahrzeuglängsgeschwindigkeit (v) und/oder
    - die Gierrate ($\omega$) und/oder
    - den Lenkradwinkel ($\delta$)

    bestimmt wird.

11. Vorrichtung nach Anspruch 9, **dadurch gekennzeichnet, dass** die ersten Mittel (13a,...,13n) derart ausgestaltet sind, dass auf wenigstens eine Art ein Offsetwert ($\omega_{offi}$)

    - abhängig von wenigstens der Auswertung eines Ausgangssignals wenigstens eines der weiteren Sensoren (11) zu wenigstens zwei unterschiedlichen Zeitpunkten und/oder
    - abhängig von wenigstens der Auswertung eines Ausgangssignals ($\omega$) des Fahrzeugsensors (10) zu wenigstens zwei unterschiedlichen Zeitpunkten,

    ermittelt wird, wobei insbesondere vorgesehen ist, dass die Ermittlung des wenigstens einen Offsetwertes

    - abhängig von dem zeitlichen Verlauf des Ausgangssignals ($\omega$) des Fahrzeugsensors (10) und/oder
    - abhängig von Signalen, welche die Raddrehzahlen ($n_i$) wenigstens eines Fahrzeugrades repräsentieren,

    erfolgt.

12. Vorrichtung nach Anspruch 1, **dadurch gekennzeichnet, dass** die ersten Mittel (13a,...,13n) derart ausgestaltet sind, dass

    - auf eine erste Art ein erster Offsetwert ($\omega_{off1}$) durch ein Stillstandsabgleichsverfahren (23a), charakterisiert durch eine verschwindende Fahrzeuglängsgeschwindigkeit (v), eine verschwindende Gierrate ($\omega$), und eine verschwindende zeitliche Ableitung der Gierrate und
    - auf eine zweite Art ein zweiter Offsetwert ($\omega_{off2}$) durch ein Lenkwinkelverfahren (23b), charakterisiert durch die Fahrzeuglängsgeschwindigkeit (v) und den Lenkradwinkel (δ), und
- auf eine dritte Art ein dritter Offsetwert ($\omega_{off3}$) durch ein Histogrammverfahren (23c), und
- auf eine vierte Art ein vierter Offsetwert ($\omega_{off4}$) durch ein Regressionsverfahren (23d) mit Berechnung der Gierrate aus Raddrehzahldifferenzen, ermittelt wird.

13. Vorrichtung nach Anspruch 1, **dadurch gekennzeichnet, dass** der mittels der zweiten Mittel (14) ermittelte korrigierte Offsetwert ($\omega_{offkorr}$) in regelmäßigen oder nicht regelmäßigen Zeitabständen ermittelt wird.

14. Verfahren zur Ermittlung eines korrigierten Offsetwertes ($\omega_{offkorr}$), das den Offset des Ausgangssignals eines ersten Fahrzeugsensors (10) repräsentiert, wobei der Sensor wenigstens eine Bewegung eines Fahrzeugs erfasst, **gekennzeichnet durch** folgende Schritte:

- Ermittlung von wenigstens zwei den Offset des Sensors (10) repräsentierenden Offsetwerten ($\omega_{off1}$,...,$\omega_{offn}$) auf wenigstens zwei unterschiedliche Arten,
- Ermittlung eines Fehlerbandes zusätzlich zum Offsetwert für den auf wenigstens einen der ermittelten Offsetwerte des Fahrzeugsensors (10),
- Ermittlung des korrigierten Offsetwertes ($\omega_{offkorr}$) abhängig von den ermittelten Offsetwerten ($\omega_{off1}$,...,$\omega_{offn}$) und wenigstens einem der Fehlerbänder.

15. Verfahren nach Anspruch 14, **dadurch gekennzeichnet, dass** der Fahrzeugsensor die Gierbewegung des Fahrzeugs erfasst.

**Claims**

1. Device for determining a corrected offset value ($\omega_{offkorr}$) which represents the offset of the output signal ($\omega$) of a first vehicle sensor (10), wherein the sensor (10) senses at least one movement of a vehicle, **characterized in that** first means (13a, ..., 13n) are provided,

- by means of which at least two offset values ($\omega_{off1}$, ..., $\omega_{offn}$) which represent the offset of the sensor (10) are determined with at least two different methods, and
- an error band is determined for at least one of the determined offset values of the sensor in addition to the offset value,

and **in that** second means (14) are provided

- by means of which the corrected offset value ($\omega_{offkorr}$) is determined as a function of the determined offset values ($\omega_{off1}$, ..., $\omega_{offn}$) and at least one of the error bands.

2. Device according to Claim 1, **characterized in that** the error bands permit in each case a minimum value and a maximum value for the respective offset value to be specified.

3. Device according to Claim 2, **characterized in that** the corrected offset value ($\omega_{offkorr}$) of the vehicle sensor (10) is determined by forming mean values between the minimum of all the maximum values ($\min(\omega_{offi}+\Delta\omega_{offi})$) and the maximum of all the minimum values ($\max(\omega_{offi}-\Delta\omega_{offi})$) of the minimum values and maximum values, acquired in at least two different ways, of the offset values of the vehicle sensor (10).

4. Device according to Claim 1, **characterized in that** the corrected offset value ($\omega_{offkorr}$) of the vehicle sensor (10) is determined by forming weighted mean values between the determined offset values of the vehicle sensor (10), wherein the offset value receives a lower weight in the formation of mean values as the width of the error band increases.

5. Device according to Claim 1, **characterized in that** at least one error band becomes wider the longer the time since the last determination of the associated offset value.

6. Device according to Claim 1, **characterized**

- **in that** each of the different methods of determining offset values ($\omega_{off1}$, ..., $\omega_{offn}$) has an assigned validity

14

range which is dependent on the driving conditions,

- for those methods which are currently outside their validity range owing to the present driving conditions and do not determine any variable ($\omega_{off1}$, ..., $\omega_{offn}$) which represents the offset value and which is taken within the last presence of the validity range, lastly with this type of determined variable which represents the offset value, and

- the associated error band becomes wider the longer the time since this last valid determination of this variable which represents the offset value.

7. Device according to Claim 1, **characterized in that** the vehicle sensor (10) senses the yaw movement of the vehicle.

8. Device according to Claim 7, **characterized in that** the determined corrected offset value ($\omega_{offkorr}$) is used for automatic inter-vehicle distance closed-loop and/or open-loop control (ACC) on the motor vehicle.

9. Device according to Claim 1, **characterized in that** the offset values ($\omega_{off1}$, ..., $\omega_{offn}$) are determined as a function of output signals from further sensors (11) which sense the movement of the vehicle and/or of the vehicle sensor (10), wherein in particular there is provision that the output signals represent

  - the wheel speeds ($n_i$) of at least one vehicle wheel and/or
  - the steering wheel angle ($\delta$) of the vehicle and/or
  - the yaw rate ($\omega$) of the vehicle.

10. Device according to Claim 1, **characterized in that** the first means (13a, ..., 13n) are configured in such a way that an offset value ($\omega_{offi}$) is determined as a function of the currently present operating state of the vehicle in at least one method, wherein in particular there is provision that
the currently present operating state is determined by

  - the longitudinal velocity (v) of the vehicle and/or
  - the yaw rate ($\omega$) and/or
  - the steering wheel angle ($\delta$).

11. Device according to Claim 9, **characterized in that** the first means (13a, ..., 13n) are configured in such a way that with at least one method an offset value ($\omega_{offi}$) is determined

  - as a function of at least the evaluation of an output signal of at least one of the further sensors (11) at at least two different times and/or
  - as a function of at least the evaluation.of an output signal ($\omega$) of the vehicle sensor (10) at least two different times,

wherein in particular there is provision that the determination of the at least one offset value takes place

  - as a function of the time profile of the output signal ($\omega$) of the vehicle sensor (10) and/or
  - as a function of signals which represent the wheel speeds ($n_i$) of at least one vehicle wheel.

12. Device according to Claim 1, **characterized in that** the first means (13a, ..., 13n) are configured in such a way that

  - with a first method a first offset value ($\omega_{off1}$) is determined by means of a stationary state compensation method (23a), **characterized by** a diminishing vehicle longitudinal velocity (v), a diminishing yaw rate ($\omega$) and a diminishing derivative of the yaw rate over time, and
  - with a second method a second offset value ($\omega_{off2}$) is determined by means of a steering angle method (23b), **characterized by** the vehicle longitudinal velocity (v) and the steering wheel angle ($\delta$), and
  - with a third method a third offset value ($\omega_{off3}$) is determined by means of a histogram method (23c), and
  - with a fourth method a fourth offset value ($\omega_{off4}$) is determined by means of a regression method (23d) with calculation of the yaw rate from differences in wheel speed.

13. Device according to Claim 1, **characterized in that** the corrected offset value ($\omega_{offkorr}$) which is determined by means of the second means (14) is determined at regular or irregular time intervals.

14. Method for determining a corrected offset value ($\omega_{offkorr}$) which represents the offset of the output signal of a first vehicle sensor (10), wherein the sensor senses at least one movement of a vehicle, **characterized by** the following steps:

- at least two offset values ($\omega_{off1}$, ... , $\omega_{offn}$) which represent the offset of the sensor (10) are determined in at least two different ways,
- an error band in addition to the offset value is determined for at least one of the determined offset values of the vehicle sensor (10),
- the corrected offset value ($\omega_{offkorr}$) is determined as a function of the determined offset values ($\omega_{off1}$, ..., $\omega_{offn}$) and at least one of the error bands.

**15.** Method according to Claim 14, **characterized in that** the vehicle sensor senses the yaw movement of the vehicle.

## Revendications

**1.** Dispositif pour déterminer une valeur de décalage corrigée ($\omega_{offkorr}$) représentant le décalage du signal de sortie ($\omega$) d'un premier capteur de véhicule (10), captant au moins un mouvement du véhicule,
**caractérisé par**
des premiers moyens (13a,...,13n),

- à l'aide desquels on détermine au moins deux des valeurs de décalage ($\omega_{off1}$,...,$\omega_{offn}$) représentant le décalage du capteur (10), selon au moins deux modes différents, et
- pour au moins l'une des valeurs de décalage déterminée par le capteur, on détermine une bande d'erreur en plus de la valeur de décalage, et
- des seconds moyens (14),
- à l'aide desquels, en fonction des valeurs de décalage déterminées ($\omega_{off1}$,...,$\omega_{offn}$) et d'au moins une des bandes d'erreur, on détermine la valeur de décalage corrigée ($\omega_{offkorr}$)

**2.** Dispositif selon la revendication 1,
**caractérisé en ce que**
les bandes d'erreur permettent d'obtenir une indication relative à une valeur minimale et une valeur maximale de la valeur de décalage respective.

**3.** Dispositif selon la revendication 2,
**caractérisé en ce que**
la détermination de la valeur de décalage corrigée ($\omega_{offkorr}$) du capteur de véhicule (10) se fait en formant la valeur moyenne entre le minimum de toutes les valeurs maximales (min ($\omega_{offi}$- $\Delta\omega_{offi}$)) et le maximum de toutes les valeurs minimales (max ($\omega_{offi}$- $\Delta\omega_{offi}$)) pour les valeurs minimales et les valeurs maximales des valeurs de décalage du capteur de véhicule (10) obtenues selon au moins deux modes différents.

**4.** Dispositif selon la revendication 1,
**caractérisé en ce que**
la détermination de la valeur de décalage corrigée ($\omega_{offkorr}$) du capteur de véhicule (10) se fait en formant une pondération de la valeur moyenne entre les valeurs de décalage déterminées du capteur de véhicule (10), la valeur de décalage étant affectée d'un poids qui diminue en fonction de l'augmentation de la bande d'erreur dans la formation de la valeur moyenne.

**5.** Dispositif selon la revendication 1,
**caractérisé en ce qu'**
au moins une bande d'erreur est d'autant plus large que la dernière détermination de la valeur de décalage correspondante est ancienne.

**6.** Dispositif selon la revendication 1,
**caractérisé en ce que**

- chacun des modes différents de détermination des valeurs de décalage ($\omega_{off1}$,...,$\omega_{offn}$) présente une plage de validité associée en fonction de l'état du véhicule,
- pour les modes qui se situent momentanément en dehors de leur plage de validité à cause de l'état de conduite présent, et qui ne déterminent pas de grandeur ($\omega_{off1}$,...,$\omega_{offn}$) représentant la valeur de décalage, on prend la grandeur représentant la valeur de décalage déterminée de cette manière dans la dernière plage de validité,
- la bande de défaut correspondante sera d'autant plus large que cette dernière détermination valable de cette grandeur représentant la valeur de décalage sera ancienne.

7. Dispositif selon la revendication 1,
**caractérisé en ce que**
le capteur de véhicule (10) saisit le mouvement de lacet du véhicule.

8. Dispositif selon la revendication 7,
**caractérisé en ce que**
la valeur de décalage corrigée, déterminée ($\omega_{offkorr}$) est utilisée pour la régulation et/ou la commande automatique d'intervalles (système ACC) d'un véhicule.

9. Dispositif selon la revendication 1,
**caractérisé en ce que**
la détermination des valeurs de décalage ($\omega_{off1}$,...,$\omega_{offn}$) se fait en fonction des signaux de sortie d'autres capteurs (11) qui saisissent le mouvement du véhicule et/ou de capteurs (10) du véhicule et il est notamment prévu que les signaux de sortie,

- représentent la vitesse de rotation ($n_i$) d'au moins une roue du véhicule et/ou,
- l'angle du volant ($\delta$) du véhicule et/ou,
- la vitesse de lacet ($\omega$) du véhicule.

10. Dispositif selon la revendication 1,
**caractérisé en ce que**
les premiers moyens (13a,...,13n) sont réalisés de façon que l'on détermine au moins selon un mode, une valeur de décalage ($\omega_{offi}$) selon de l'état de fonctionnement instantané du véhicule et il est notamment prévu de déterminer l'état de fonctionnement présent du véhicule par,

- la vitesse longitudinale du véhicule (V) et/ ou,
- la vitesse de lacet ($\omega$) et/ou,
- l'angle ($\delta$) du volant.

11. Dispositif selon la revendication 9,
**caractérisé en ce que**
les premiers moyens (13a,...,13n) sont réalisés de façon à déterminer au moins selon un mode, une valeur de décalage ($\omega_{offi}$),

- dépendant au moins de l'exploitation d'un signal de sortie d'au moins l'un des autres capteurs (11) en au moins deux instants différents et/ou,
- en fonction au moins de l'exploitation d'un signal de sortie ($\omega$) du capteur de véhicule (10) en au moins deux instants différents,

il est notamment prévu de déterminer au moins une valeur de décalage,

- en fonction de l'évolution chronologique du signal de sortie ($\omega$) du capteur de véhicule (10) et/ ou,
- en fonction des signaux représentant les vitesses de rotation de roue ($n_i$) d'au moins une roue du véhicule.

12. Dispositif selon la revendication 1,
**caractérisé en ce que**
les premiers moyens (13a,...,13n) sont réalisés de façon que,

- selon un premier mode, on détermine une première valeur de décalage ($\omega_{off1}$) par un procédé de compensation d'arrêt (23) **caractérisé par** une vitesse longitudinale de véhicule, décroissante (v), une vitesse de lacet ($\omega$), décroissante et une dérivation de la vitesse de lacet diminuant dans le temps, et
- selon un second mode, on détermine une seconde valeur de décalage ($\omega_{off2}$) par un procédé d'angle de direction (23b) **caractérisé par** la vitesse longitudinale (v) du véhicule et l'angle du volant de direction ($\delta$), et
- selon un troisième mode, on détermine une troisième valeur de décalage ($\omega_{off3}$) par un procédé (23c) utilisant un histogramme, et

- selon un quatrième mode, on détermine une quatrième valeur de décalage ($\omega_{off4}$) par un procédé de régression (23d) en calculant la vitesse de lacet à partir des différences de vitesse de rotation des roues.

**13.** Dispositif selon la revendication 1,
**caractérisé en ce que**
la valeur de décalage ($\omega_{offkorr}$), déterminée, corrigée à l'aide des seconds moyens (14) se définit avec des intervalles de temps réguliers ou non réguliers.

**14.** Procédé de détermination d'une valeur de décalage corrigée ($\omega_{offkorr}$) représentant le décalage du signal de sortie d'un premier capteur de véhicule (10), le capteur détectant au moins un mouvement du véhicule,
**caractérisé par**
les étapes suivantes:

- on détermine au moins deux valeurs de décalage ($\omega_{off1},...,\omega_{offn}$) représentant le décalage du capteur (10) suivant au moins deux modes différents,
- on détermine une bande d'erreur en plus de la valeur de décalage pour au moins l'une des valeurs de décalage déterminées par le capteur de véhicule (10),
- on détermine la valeur de décalage corrigée ($\omega_{offkorr}$) en fonction des valeurs de décalage déterminées ($\omega_{off1},...,\omega_{offn}$) et d'au moins l'une des bandes d'erreur.

**15.** Procédé selon la revendication 14,
**caractérisé en ce que**
le capteur du véhicule détecte le mouvement de lacet du véhicule.

Fig. 1

Steuergerät 1 — 15a
Steuergerät m — 15m

Weitere Fahrzeugsteuerungs-systemfunktionen — 12

Ermittlung eines korrigierten Ausgangssignals — 14

$\omega_{off\ korr}$

$\omega_{off\ 1}$ — Ermittlungsart 1 — 13a
$\omega_{off\ 2}$ — Ermittlungsart 2 — 13b
$\omega_{off\ n}$ — Ermittlungsart n — 13n

Weitere Eingangs-datenquellen — 11

Fahrzeug-sensor — 10

$\omega$

Fahrzeugsteuerungssystem — 16

Fig. 2

| | | |
|---|---|---|
| **Fahrzeug-längs-geschwindigkeit** 22 | v | **Stillstands-abgleichs-verfahren** 23a |
| **Lenkrad-winkelsensor** 21a | δ | **Lenkwinkel-verfahren** 23b |
| **Drehraten-sensor** 21b | ω | **Histogramm-verfahren** 23c |
| **Raddrehzahl-sensoren** 21c | $n_i$ | **Regressions-verfahren** 23d |

$\omega_{off\,1}$  $\Delta\omega_{off\,1}$
$\omega_{off\,2}$  $\Delta\omega_{off\,2}$
$\omega_{off\,3}$  $\Delta\omega_{off\,3}$
$\omega_{off\,4}$  $\Delta\omega_{off\,4}$

**Bestimmung eines korrigierten Gierraten-offsets** 24

$\omega_{off\,korr}$

**Weitere Fahrzeug-steuerungs-system-funktionen** 12

**Steuergerät 1** 15a  ...  **Steuergerät m** 15m

$n_i$

EP 1 258 407 B1

## Fig. 3

$\omega_{offmaxi}$

$\omega_{offi}$

$\omega_{offmini}$

$\omega_{offi}$
$\omega_{offmaxi}$
$\omega_{offmini}$

$t_1$

$t$

i = 0 — 71

Einlesen von ω — 72

i = 0
t = t + Δt_a — 74

t = t + Δt_a — 78

Stillstandsbedingungen
erfüllt
? — 73

nein

ja

i = i + 1 — 75

i = n
? — 76

nein

ja

Erfüllungsintervall = true
Wert = ω — 77

Fig. 4

Fig. 5

EP 1 258 407 B1

# Fig. 6

# Fig. 7

(1)   $\omega_{off\,1} - \Delta\,\omega_{off\,1}$ $\vdash\!\!\!-\!\!\!-\!\!\!-\!\!\!-\!\!\!-\!\!\!\!\overset{\omega_{off\,1}}{\mid}\!\!\!-\!\!\!-\!\!\!-\!\!\!-\!\!\!-\!\!\!\dashv$ $\omega_{off\,1} + \Delta\,\omega_{off\,1}$

(2)   $\omega_{off\,2} - \Delta\,\omega_{off\,2}$ $\vdash\!\!\!-\!\!\!-\!\!\!-\!\!\!\overset{\omega_{off\,2}}{\mid}\!\!\!-\!\!\!-\!\!\!-\!\!\!\dashv$ $\omega_{off\,2} + \Delta\,\omega_{off\,2}$

(3)   $\omega_{off\,3} - \Delta\,\omega_{off\,3}$ $\vdash\!\!\!-\!\!\!\overset{\omega_{off\,3}}{\mid}\!\!\!-\!\!\!\dashv$ $\omega_{off\,3} + \Delta\,\omega_{off\,3}$

(4)   $\omega_{off\,4} - \Delta\,\omega_{off\,4}$ $\vdash\!\!\!-\!\!\!-\!\!\!-\!\!\!-\!\!\!-\!\!\!\overset{\omega_{off\,4}}{\mid}\!\!\!-\!\!\!-\!\!\!-\!\!\!-\!\!\!-\!\!\!\dashv$ $\omega_{off\,4} + \Delta\,\omega_{off\,4}$

$\omega_{off}$

$\max\left(\omega_{off\,i} - \Delta\,\omega_{off\,i}\right)$     $\min\left(\omega_{off\,i} + \Delta\,\omega_{off\,i}\right)$

**EP 1 258 407 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19722947 C1

- DE 19636443 A1